# EUROPÄISCHE PATENTSCHRIFT

(11) **EP 1 212 636 B1**
(45) Veröffentlichungstag und Bekanntmachung des Hinweises auf die Patenterteilung: **11.06.2003**
(21) Anmeldenummer: 00962231.7
(22) Anmeldetag: 16.08.2000
(51) Int. Cl.: G01V 1/30

(54) **VERFAHREN ZUR BEARBEITUNG SEISMISCHER MESSDATEN MIT EINEM NEURONALEN NETZWERK**
METHOD FOR PROCESSING MEASURED SEISMIC DATA WITH A NEURONAL NETWORK
PROCEDE DE TRAITEMENT DE DONNEES SISMIQUES AU MOYEN D'UN RESEAU NEURONAL

(30) Priorität: 10.09.1999 DE 19943325
(43) Veröffentlichungstag der Anmeldung: 12.06.2002
(73) Patentinhaber: Trappe, Henning, 30916 Isernhagen (DE)
(72) Erfinder: TRAPPE, Henning, D-30916 Isernhagen (DE); HELLMICH, Carsten, D-30163 Hannover (DE); FÖLL, Marc, D-30163 Hannover (DE)
(74) Vertreter: Hansen, Jochen
(86) Internationale Anmeldenummer: DE0002796
(87) Internationale Veröffentlichungsnummer: WO01020364

(56) Entgegenhaltungen:
- WO-A-92/17849
- WO-A-97/39367
- US-A- 5 859 925

## Beschreibung

Die Erfindung betrifft ein Verfahren zur Bearbeitung eines mit seismischen Attributen belegten 3-D Meßdatensatzes mittels eines neuronalen Netzwerkes, wobei mit ausgewählten Trainingsdaten eine selbstorganisierende Karte trainiert wird und die zu untersuchenden Daten nach der selbstorganisierenden Karte klassifiziert werden.

Neuronale Netze sind ein Oberbegriff für eine Vielzahl von Verfahren, die sich an kognitiven Lernprozessen orientieren. Eine Unterscheidung der Verfahren richtet sich nach der Art des Lernens. Beim sogenannten "überwachten Lernen" werden sowohl Ein- wie auch Ausgabe vorgegeben. Bei dem erfindungsrelevanten Netzwerktyp, der selbstorganisierenden Karte, dient der dort unüberwachte Lernprozeß dazu, Beziehungen zwischen den Daten zu erstellen und auszunutzen. Selbstorganisierende Karten entstammen dem Versuch, Erklärungen für neuronale Prozesse im Gehirn zu entwickeln. Beispielsweise ist in der Druckschrift Kohonen, T., 1984, Self-Organization and Associative Memory 1. Aufl., Springer Verlag Heidelberg, ein derartiges stochastisches Modell beschrieben. Ferner wird auf die Druckschrift Ritter, H., Martinetz, T. and Schulten, K., 1991, Neuronale Netze, Addision-Wesley verwiesen.

Beim Kohonen-Modell sind alle Neuronen vollständig mit der Eingabe verbunden. Die Kopplungsstärke mit der Eingabe ist variabel und wird als Gewicht bezeichnet. Untereinander sind die Neuronen jeweils mit ihren Nachbarn gekoppelt. Wird ein Trainingsmuster angelegt, so treten alle Neuronen in Konkurrenz. Das Neuron mit der größten Übereinstimmung zum Trainingsmuster gewinnt und adaptiert seine Gewichte in Richtung des Musters. Die Übereinstimmung wird z. B. durch Bildung des Skalarproduktes zwischen Trainingsmuster und Gewichtsvektor berechnet. Alle anderen Neuronen adaptieren mit einer geringeren Stärke ihre Gewichte. Die Adaptionsstärke hängt dabei vom Abstand des einzelnen Neurons auf der neuronalen Karte zum Gewinnerneuron ab. Der Abstand bestimmt sich aus der Zahl der Neuronen, die zwischen dem Neuron und dem Gewinnerneuron liegen. Nun werden weitere Trainingsmuster angelegt und bei jedem Muster der Adaptionsschritt wiederholt. Die Neuronen organisieren sich dabei in Richtung der Trainingsmuster. Gleichzeitig sorgt die Kopplung untereinander dafür, daß alle Neuronen am Prozeß beteiligt sind und ähnliche Trainingsmuster auf räumlich benachbarte Neuronen abgebildet werden.

Nach dem Training können die Eingabemuster den Neuronen zugeordnet werden. Dazu wird für jedes Trainingsmuster das Gewinnerneuron bestimmt. Den Neuronen können dann gewünschte Eigenschaften der Trainingsmuster als Referenzwert zugewiesen werden. Im Normalfall ist die Zahl der Eingabemuster größer als die der Neuronen, so daß mehrere Eingabemuster auf ein Neuron abgebildet werden. Die Referenzwerte werden dann aus der Synthese der zutreffenden Eingabemuster gebildet. Eine Klassifizierung von unbekannten Eingabedaten findet wiederum nach dem Konkurrenzprinzip statt. Das Muster wird an das Netzwerk angelegt und das Referenzmuster mit der größten Übereinstimmung ausgewählt. Eigenschaften des Referenzmusters können dann, soweit vorhanden, auf das Eingabemuster übertragen werden.

Dieses allgemein bekannte Verfahren eignet sich auch als spezialisierte Auswertemethode für die komplexen Signalbeziehungen in seismischen Daten, in denen verrauschte, nicht lineare Signale zu verarbeiten sind. In der Veröffentlichung Trappe, H., 1994, Potential neuronaler Netze in der Kohlenwasserstoffexploration und -produktion, Tagungsband zum 14. Mintrop Seminar, wird das Anwendungspotential neuronaler Netze für den Bereich der Kohlenwasserstoffexploration und - produktion vorgestellt. Darin wird auch ein Beispiel eines selbstorganisierenden neuronalen Prozesses zur seismischen Reservoircharakterisierung gegeben.

Aus der Veröffentlichung Trappe, H. und Hellmich, C. "Areal Prediction of Porosity Thickness from 3D Seismic Data by Means of Neural Networks" (EAGE 59^{th} Conference and Technical Exhibition - Geneva, Switzerland, 26 - 30 May 1997) ist die Anwendung eines neuronalen, selbstorganisierenden Netzwerktyps zur Vorhersage der örtlichen Reservoirqualität aus seismischen 3D-Daten bekannt. Ziel der Untersuchung ist es, aus den seismischen Daten und daraus abgeleiteten Attributen entlang eines interpretierten Horizontes, hier Rotliegendes, eine Porositätsmächtigkeitskarte zu erstellen. Als Eingangsdaten werden die Amplitude, die laterale Variation der Amplitude und die mit 3D-seismischer Inversion erhaltene akustische Impedanz verwendet. Nachteilig ist, daß die Auswertung auf eine eng definierte Zone beschränkt und lediglich eine konstante Zeit oder ein interpretierter Horizont betrachtet wird.

Aus der US 5,859,925 ist ein Klassifizierungssystem mit einem neuronalen Netzwerk für unterschiedlichste Anwendungen, auch geophysikalische, bekannt. In dieser Schrift wird jedoch nicht der unüberwachte Lernprozeß in Form einer sog. selbstorganisierenden Karte beschrieben. Ferner fehlt der Bezug auf eine Bearbeitung von räumlichen Meßdaten-Subvolumen.

In der WO 92/17849 wird die Signalverarbeitung, beispielsweise für medizinische EEG-Messungen mittels neuronalen Netzwerken beschrieben. Bei diesem selbstorganisierenden Netzwerk wird die Zahl der Neuronen vergrößert, um ein vorgegebenes Fehlerkriterium zu erreichen.

Aus der Veröffentlichung De Groot P., Xrajewski, P. und Bischoff, R., 1998, "Evaluation of Remaining Oil Potential with 3D Seismic Using Neural Networks", EAGE Tagung und Ausstellung, Leipzig, ist die Verwendung eines unüberwachten, neuronalen Netzwerkes zur Klassifizierung der Porenfüllung aus seismischen Daten bekannt. Dabei werden kurze Spursegmente um den zu untersuchenden Horizont für das Training und die Klassifizierung verwandt.

Ferner ist aus der US 5,373,486 ein Verfahren zur Identifikation und Klassifikation von seismologischen Quellen, beispielsweise zur Erdbebenvorhersage oder zur Verifikation von Nuklearwaffentests, bekannt, bei dem das beim Seismometer ankommende Signal in Form einer Zeitreihe in ein Spektrogramm und schließlich in eine phasen-invariante Darstellung durch eine zweidimensionale Fouriertransformation überführt wird. Diese bearbeiteten Daten werden einem selbstorganisierenden neuronalen Netzwerk präsentiert.

Aus der US 5,940,777 ist ein Verfahren zum automatischen Erkennen von seismischen Pattern bekannt, bei dem einzelne seismische Spurabschnitte mit einem selbstorganisierenden neuronalen Netzwerk erkannt werden sollen, wobei das eindimensionale neuronale Netzwerk (Kette) genauso viele Elemente aufweist, wie verschiedene Pattern vorhanden sind.

Allen vorgenannten, bekannten Verfahren ist gemeinsam, daß lediglich einzelne seismische Datenpunkte (sample) oder kurze seismische Spursegmente verwendet werden, die sich jeweils immer nur auf eine einzelne seismische Spur beziehen. Nachteilig ist somit, daß bei der Zuordnung der aus den seismischen Daten gewonnenen Informationen das lokale Umfeld unberücksichtigt bleibt.

Die WO 97/39367 beschreibt ein Verfahren und eine Vorrichtung zur seismischen Signalverarbeitung und Exploration bei dem ein seismisches 3D-Volumen in Zellen unterteilt wird. Diese Zellen sind im einfachsten Fall würfelförmig. Aus dem in einer Zelle befindlichen wenigstens zwei Spurabschnitten wird eine Korrelationsmatrix als Summen der Diffenzen jeweils des inneren und äußeren Produkts der Wertetuple aus den Spurabschnitten gebildet. Als Maß für die Kohärenz wird dann der Quotient aus dem größten Eigenwert der Matrix und der Summe aller Eigenwerte berechnet. Als Ergebnis entsteht wiederum ein 3D-Datenvolumen bestehend aus Kohärenzwerten. Hier werden zwar Subvolumen betrachtet, jedoch ohne Anwendung eines neuronalen Netzes.

Die zur Bestimmung der Gewichte im neuronalen Netz benötigten Trainingsbeispiele werden bei den bekannten Verfahren entlang eines Horizontes oder in einer relativ engen Zone um das interessierende Reservoir extrahiert. Ebenso wird bei der nach dem Training anschließenden Klassifizierung mit den übrigen Daten verfahren. Damit werden die Trainingsbeispiele gezielt ausgewählt, wobei zur Festlegung eines Horizontes oder Reservoirs bereits mit anderen Methoden interpretierte seismische Daten vorliegen müssen. Zudem birgt die gezielte Auswahl von Trainingsbeispielen die Gefahr, daß physikalische Eigenschaften des Untergrundes, die stark von den Ausgewählten abweichen, in der Klassifizierung unberücksichtigt oder zumindest unterrepräsentiert bleiben.

Ferner wird im Stand der Technik die interne Struktur und Klassenzahl des neuronalen Netzwerkes vor dem Training festgelegt. Häufig zeigt sich jedoch, daß ein vorgegebenes Netzwerk keine repräsentative Klassifizierung der Meßdaten ermöglicht. Dann ist eine Vielzahl von Trainingsläufen notwendig, um die richtigen Parameter, nämlich die Zahl der Klassen, die Auswahl der Attribute und die Auswahl der Trainingsbeispiele zu finden und für die Auswertung der Eingangsdaten festzulegen.

Aufgabe der Erfindung ist es daher, ein eingangs genanntes Verfahren zur Bearbeitung eines seismischen Meßdatensatzes mit einem neuronalen Netzwerk anzugeben, bei dem eine umgebungsbezogene Auswertung erreicht wird.

Gelöst wird diese Aufgabe mit einem Verfahren gemäß Anspruch 1.

Dadurch, daß die Trainingsdaten aus dem Meßdatensatz zufällig ausgewählt werden, soll eine automatisierte Auswahl von Trainingsdaten sichergestellt werden. Die Wahl der Trainingsbeispiele ist somit nicht auf einen Horizont oder eine ausgewählte Reservoirzone beschränkt, so daß keine Vorabinterpretation stattfindet. Durch die zufällige Auswahl finden auch Muster bzw. Trainingsdaten mit extremen Wertebereichen Eingang in das Training. Es werden somit auch Situationen berücksichtigt, die für sehr unwahrscheinlich gehalten werden. Die Trainingsdaten umfassen damit eine viel größere Dynamik, so daß beispielsweise Trends in Amplitudenverläufen mitberücksichtigt werden können. Wenn die Trainingsdaten aus einem vorbestimmten Zeit/Teufenfenster des Meßdatensatzes zufällig ausgewählt werden, kann die Auswahl auf einen beschränkten Bereich des gesamten 3D-Volumens bei einer hierauf gerichteten Auswertung beschränkt werden.

Durch die Bearbeitung der Meßdaten in Form von einer räumlichen Umgebung eines jeden Meßdatenpunktes umfassenden Subvolumen wird erreicht, daß neben der vertikalen Verteilung der Amplitudeninformation als kennzeichnende Größe auch die laterale Änderung des seismischen Signals zur Charakterisierung des Untergrundes berücksichtigt wird. Damit können aufgrund der Kenntnisse der lateralen Änderungen der Geologie auch Aussagen über die Mächtigkeit von Sandkörpern bzw. des sedimentologischen Umfeldes aus der Verteilung der Werte im Subvolumen bestimmt werden. Das erfindungsgemäße Verfahren erlaubt die Klassifizierung seismischer oder mit aus der Seismik abgeleiteten Attributen belegten Subvolumen zur automatischen Auswertung. Dabei handelt es sich bei den Eingabedaten um ein dem seismischen Datenpunkt zugeordnetes Volumen. Nach Abschluß des Trainingsverfahrens kann jedem Datenpunkt ein Klassifizierungsergebnis zugewiesen werden. Ähnliche seismische Subvolumen werden dann bei der automatischen Auswertung gleichen oder benachbarten Klassen zugewiesen.

Durch die Betrachtung in Subvolumen wird unter anderem berücksichtigt, daß die reflektierte seismische Energie durch Grenzen der seismischen Auflösung und der verwendeten numerischen Methoden nicht exakt einem Untergrundpunkt zugeordnet werden kann. Vielmehr wird dieser besser durch sein lokales Umfeld beschrieben, wozu die Betrachtung der Abhängigkeiten in einem Subvolumen vorteilhaft gegenüber idealisierten eindimensionalen Erdmodellen ist.

Bevorzugt besteht jedes Subvolumen aus einem Meßdatenpunkt als Bezugspunkt und einer vorgewählten Anzahl und relativen Lage zum Bezugspunkt von Meßdatenpunkten aus der Umgebung des Bezugspunktes. Bei einer fest vorgewählten Anzahl von Datenpunkten im Subvolumen wird die Dimension des Gewichtsvektors dieser Anzahl gleichgesetzt und nicht mehr verändert. Die durch die Gewichtsvektoren festgelegte Wechselwirkung der Neuronen untereinander berücksichtigt somit die in den Subvolumen enthaltenen Umgebungsabhängigkeiten.

Beispielsweise haben die Subvolumen Quaderform, beispielsweise mit 3 x 3 x 3 Datenpunkten, oder Ellipsoidform mit um den Bezugspunkt zentrierten Hauptachsen. Damit wird eine praktikable und gleichgewichtige Einbeziehung von den betrachteten Datenpunkt (Bezugspunkt) umgebenden Datenpunkten erreicht. Die Quader- oder Würfelform erleichtert die Datenzuordnung zu Subvolumen in üblichen, kubisch aufgebauten 3D-Meßdatensätzen.

Das neuronale Netzwerk wird mit einer vorbestimmten Anzahl von Trainingsdaten trainiert.

Um gleichwohl eine Selektion auf bestimmte Verhalten im betrachteten 3D-Meßdatensatz vorzunehmen, können die Auswahl der Trainingsdaten auf vorbestimmte Meßdatenlinien (Inlines) und -querlinien (Crosslines) beschränkt und die Trainingsdaten aus einer von zwei umgebenden Horizonten definierten Zielschicht des Meßdatensatzes zufällig ausgewählt werden. Dabei soll beispielsweise eine Beschränkung auf geologisch sinnvolle Bereiche bei der Trainingsdatenauswahl erreicht werden. Darüberhinaus kann die Verwendung uneinheitlicher Meßmethoden innerhalb eines 3D-Meßdatensatzes, beispielsweise Sprengseismik-Vibroseismik, Landseismik-Flachwasserseismik, etc. durch eine entsprechend zugeordnete, also beschränkte Auswahl von Trainingsdaten bei.der Auswertung berücksichtigt werden.

Ferner kann eine zielgerichtete Trainingsdatenauswahl dadurch erreicht werden, daß für alle Subvolumen aus dem Meßdatensatz Kennzahlen bestimmt und die Trainingsdaten nach vorbestimmten, aus den Kennzahlen abgeleiteten Kriterien zufällig ausgewählt werden.

Als Kennzahlen können beispielsweise gewählt werden: mittlere Amplitude, mittlere absolute Amplitude, Kohärenz, Dip (Schichtneigung), Azimuth, Störungsnähe, Differenz aus kleinstem und größtem Amplitudenwert etc. Dabei können zur Bestimmung von Auswahlkriterien auch mehrere Kennzahlen kombiniert werden.

Um eine repräsentative Auswahl von Trainingsbeispielen aus dem betrachteten 3D-Meßdatensatz zu gewinnen, wird die Verteilung der Kennzahlen aller Subvolumen aus dem Meßdatensatz als Gesamtverteilung bestimmt und die Trainingsdaten so ausgewählt, daß die Verteilung der Kennzahlen der Trainingsdaten mit der Gesamtverteilung übereinstimmt.

Dadurch, daß die Verteilung der Kennzahlen aller Subvolumen aus dem Meßdatensatz bestimmt und die Trainingsdaten so zufällig ausgewählt werden, daß die Verteilung der Kennzahlen der Trainingsdaten einer zuvor gewählten Verteilung entspricht, wird bewußt eine nicht repräsentative Trainingsdatenauswahl angegeben, die beispielsweise erwünscht sein kann, wenn Ziel der Klassifikation eine Störungserkennung ist, aber die Datenpunkte in Störungsnähe einen nur sehr geringen Anteil am Meßdatensatz ausmachen.

Um eine Fehlausrichtung der gegenseitigen Abhängigkeit im Neuronennetz zum Beginn des Trainings zu vermeiden, werden die Gewichtsvektoren bei Trainingsbeginn mit Zufallszahlen besetzt.

Bei ähnlichen geologischen Verhältnissen können ausnahmsweise die Gewichtsvektoren aus einer früheren, ähnlichen Berechnung übernommen werden. Auch kann das neuronale Netzwerk durch ein bereits erzeugtes Trainingsergebnis initalisiert werden, so daß beispielsweise bei Hinzunahme von neuen Trainingsdaten nicht der gesamte Trainingsverlauf wiederholt werden muß.

Dadurch, daß das Training solange durchgeführt wird, bis ein vorbestimmtes Fehlerkriterium erreicht wird, kann eine hohe Güte der Datenauswertung sichergestellt werden. Dabei kann als Fehlerkriterium der mittlere Fehler bezogen auf die verwendeten Eingabedaten als Summe der Einzelfehler pro Eingabedatum geteilt durch die Gesamtzahl der Eingabedaten bestimmt werden. Unterschreitet dieser Wert einen vorgegebenen maximalen Fehler, wird das Training beendet.

Wird dieses Fehlerkriterium nicht erreicht, wird die Zahl und/oder Vernetzung der Neuronen während des Trainingslaufes verändert. Bevorzugt wird dabei zunächst die Zahl der Neuronen erhöht und in einem weiteren Schritt die Vernetzung erhöht. Alternativ kann auch der Abstand der Gewichtsvektoren zweier benachbarter Neuronen als Kriterium zum Einfügen von Neuronen und Verbindungen gewählt werden.

Bei einem Neuronennetz mit 2-dimensionaler Gitteranordnung kann eine Vierer- oder Achter-Nachbarschaft mit Ausnahme der am Rand liegenden Neuronen ausgebildet werden. Die zweidimensionale Gitteranordnung kann jedoch eine beliebige Vernetzung aufweisen.

Wenn das Neuronennetz in Torusform angeordnet ist, ist ein Gebilde vorgegeben, bei dem negative Randeffekte vermieden werden.

Wenn das Neuronennetz als Kette ausgebildet ist, hat jedes Neuron mit Ausnahme des Anfangs- und Endneurons zwei Nachbarn, wobei vorteilhaft ist, daß eine aufsteigende Zuordnung von Ordungszahlen zu den Neuronen möglich ist und somit auch eine graphische Darstellung, beispielsweise Farbskala, einfach zuordbar ist. In weiterer Ausbildung können auch mehrere Ketten vorgesehen werden.

Alternativ kann das Neuronennetz auch als dreidimensionales Gitter ausgebildet sein. Dabei ist eine Verknüpfung benachbarter Neuronen mittels Gewichtsvektoren bei einer rechtwinkligen Gitteranordnung als Sechser-Nachbarschaft mit nur orthogonal zueinander angeordneten Verknüpfungsbeziehungen denkbar.

Dadurch, daß jedes Neuron eine eindeutige Ordnungszahl aufweist und jedem Meßdatenpunkt die entsprechende Ordnungszahl des Gewinnerneurons und ein Einzelfehler als Abstand zwischen dem Meßdatenpunkt und dem Gewinnerneuron als Ergebnisdatensatz zugeordnet wird, wird eine eindeutige Zuordnung eines Ergebniswerte-Paares zu jedem Meßdatenpunkt (sample) des 3D-Meßdatensatzes geliefert. Für den Einzelfehler eines Eingabedatums wird der Abstand des Eingabedatums zu allen Neuronen bestimmt. Als Einzelfehler wird dann der geringste Abstand gewählt, wobei das zu diesem geringsten Abstand zugehörige Neuron gleichzeitig das Gewinnerneuron ist, das die entsprechende Ordnungszahl repräsentiert. Gebräuchliche Abstandsmaße sind das vektorielle Skalarprodukt oder der euklidische Abstand.

Bevorzugt-wird der mit Ordnungszahlen und Fehlerwerten besetzte Ergebnisdatensatz in digitaler Form weiterverarbeitet, aus dem Karten oder Schnitte zur 2D-Darstellung extrahiert werden können.

Um eine graphische Darstellbarkeit der im Ergebnisdatensatz zugeordneten Ordnungszahlen zu ermöglichen, werden bei zweidimensionaler Neuronenanordnung die Ordnungszahlen der Neuronen als Polarkoordinaten errechnet, wobei die Winkelkoordinate eines Neurons einen Farbwert und der Radius eine Sättigung angibt. Der Ursprung des Koordinatensystems wird dabei im Zentrum des Neuronennetzes definiert. Die Farbintensität kann beispielsweise konstant oder gleich der Sättigung gewählt werden. Damit ist jede im Neuronennetz vorkommende Ordnungszahl durch Farbwert und Sättigung optisch erkennbar repräsentiert. Benachbart liegende Neuronen weisen auch ähnliche Farbwerte und ähnliche Sättigungen auf.

Entsprechend werden bei dreidimensionaler Neuronenanordnung Farbe, Sättigung und Intensität aus in Kugelkoordinaten errechneten Ordnungszahlen abgeleitet. Auch hier wird der Ursprung des Koordinatensystems im Zentrum der Neuronenanordnung definiert.

Neben dem mit seismischen Amplituden belegten 3D-Meßdatensatz können als Eingabedatensätze auch Daten mit aus den seismischen Daten hergeleiteten Attributen, beispielsweise akustisches Impedanzvolumen, Kohärenz, Dip (Neigung) und/oder Azimuth verwendet werden.

Nachfolgend wird ein Ausführungsbeispiel der Erfindung unter Bezugnahme auf die beiliegenden Figuren erläutert.

Darin zeigt:
- Fig. 1: schematisch zwei seismische Attribute, die auf einer neuronalen Karte abgebildet werden,
- Fig. 2: eine Topologie eines zweidimensionalen neuronalen Netzwerkes und
- Fig. 3: eine zweidimensionale Kartendarstellung aus einem erfindungsgemäßen Ergebnisdatensatz.

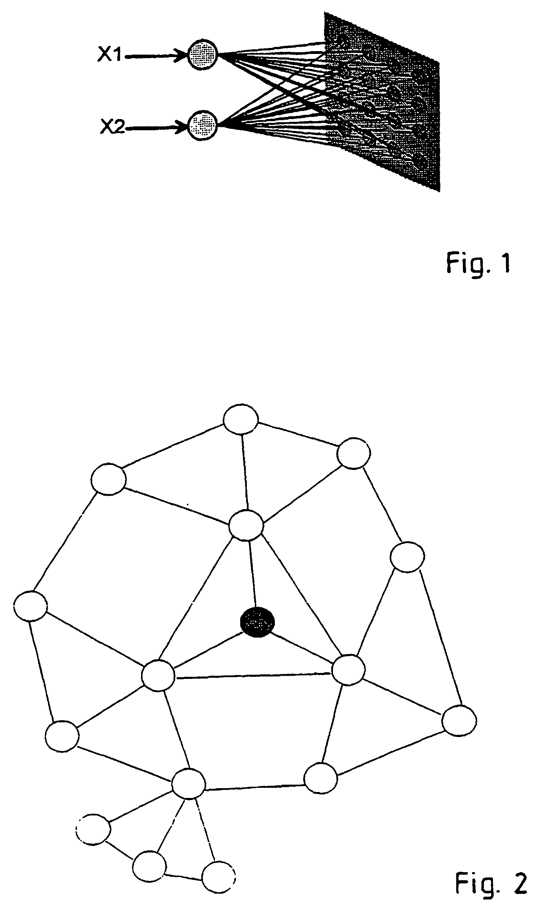

In Fig. 1 sind beispielhaft zwei Eingabedatenmuster (Trainingsmuster) X₁, X₂, die mit seismischen Attributen belegt sind, dargestellt. Die neuronale Karte ist als flächiges, zweidimensionales Gebilde mit 4 x 4 Neuronen dargestellt. Die Neuronen sind mit ihren Nachbarn untereinander gekoppelt, was der Übersichtlichkeit halber in Fig. 1 nicht dargestellt ist. Außerdem sind alle Neuronen mit der Eingabe verbunden, so daß bei Anlegen der Trainingsmuster X₁, X₂ alle Neuronen in Konkurrenz treten. Das Neuron mit der größten Übereinstimmung zum Trainingsmuster gewinnt und adaptiert seine Gewichte in Richtung des Musters. Alle anderen Neuronen adaptieren mit geringerer Stärke entsprechend ihrer Gewichte.

In Fig. 2 ist ein Beispiel eines zweidimensionalen neuronalen Netzwerkes abgebildet, bei dem ausgehend vom zentralen, dunkler dargestellten Neuron eine Verdreifachung der Neuronenzahl mit jedem weiteren Ringbereich um das zentrale Neuron angegeben ist. Das zentrale Neuron und die Randneuronen besitzen eine Dreier-Nachbarschaft, wohingegen die übrigen Neuronen Sechser-Nachbarschaft aufweisen. Vorteilhaft wird bei dieser spinnennetzförmigen Anordnung der Neuronen die ausgewogene Abhängigkeit der Neuronen untereinander sichergestellt. Bei einer automatischen Erhöhung der Neuronenzahl gemäß Anspruch 14 kann ein weiterer Neuronenring durch Verdreifachen der Zahl der Randneuronen erzeugt werden.

Selbstverständlich ist die Gestaltung des Neuronennetzes beliebig. Von eindimensionalen Netzen (Ketten) bis zu dreidimensionalen Gebilden mit unterschiedlicher Nachbarschaftskopplung sind verschiedenste Ausgestaltungen denkbar.

Für eine gute graphische Darstellbarkeit der Ergebnisdatensätze ist es von Vorteil, wenn die Neuronennetze eine die Nachbarschaftsbeziehungen repräsentierende Skalierungszuordnung aufweisen.

Bei einer Neuronenkette kann dies beispielsweise durch eine Grauabstufung der aufeinanderfolgenden Ordnungszahlen (Klassen) erreicht werden. Bei zweidimensionalen Gebilden, wie beispielsweise dem in Fig. 2 dargestellten spinnennetzförmigen Neuronennetz, werden die Ordnungszahlen vorteilhaft in Polarkoordinaten um das zentrale Ursprungsneuron gemäß Anspruch 21 errechnet. Damit kann für die graphische Darstellung eine eindeutige Farbzuordnung erreicht werden, die auch die Nachbarschaftsnähe durch ähnliche Farbwerte bzw. Farbsättigung graphisch widerspiegeln. Gleiches gilt für dreidimensionale Gebilde, bei denen gemäß Anspruch 22 die Ordnungszahlen in Kugelkoordinaten um ein Neuron im Zentrum errechnet werden, womit dann zur graphischen Darstellung die drei Kugelkoordinaten mit Farbe, Sättigung und Intensität belegt werden und somit ebenfalls die Nachbarschaftsbeziehungen graphisch wiedergeben.

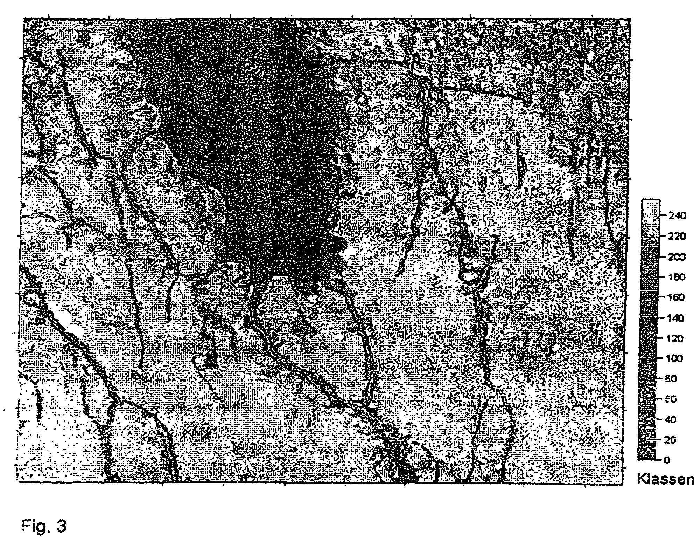

In Fig. 3 ist das Ergebnis einer erfindungsgemäßen Neuroklassifikation anhand einer horizontalen Karte dargestellt. Darin werden automatisch erkannte Störungszonen in einem Teufenbereich von ca. 3.700 m gezeigt.

Nachfolgend wird das Auswerteverfahren unter Bezug auf die in Fig. 3 gezeigte Darstellung erläutert.

Ein 3D-Meßdatensatz von dem zu untersuchenden Gebiet dient als Ausgangspunkt für das erfindungsgemäße Verfahren. Zunächst wird eine Subvolumengröße mit einem Bezugspunkte und einer darum angeordneten definierten Zahl und relativen Lage zum Bezugspunkt von weiteren Meßdatenpunkten (sample) definiert. Im in Fig. 3 angegebenen Beispiel haben die Subvolumen eine Ausdehnung von 5 Spuren x 5 Spuren x 12 Millisekunden, bei einer Samplingrate von 4 Millisekunden und einem Spurabstand von 25 m. Das quaderförmige Subvolumen umfaßt somit 5 x 5 x 3 Datenpunkte (entsprechend 75 sample), die auf den zentralen Meßdatenpunkt (Bezugspunkt) bezogen sind.

Weiter wird ein neuronales Netzwerk mit Anzahl und Anordnung von Neuronen vorgegeben. Im vorliegenden Beispiel wird eine Kettenanordnung gewählt, wobei die Zahl der Neuronen erst nach dem Training endgültig festgelegt ist.

Je nach Aufgabenstellung bei der Auswertung wird dann die Trainingsmusterauswahl begrenzt. Da beim hier dargestellten Beispiel als Aufgabe die automatische Detektion von Störungszonen in einem Teufenbereich von ca. 3.700 m gestellt wurde, wurden die Trainingsmuster zufällig aus einem Fenster (Zeitscheibe) der Größe 200 Millisekunden in diesem Bereich ausgewählt. Dabei wurde weiter lediglich vorgegeben, daß 1.000 Trainingsmuster für das Training verwendet werden.

Nun werden nacheinander die ausgewählten Trainingsmuster an das Neuronennetz angelegt. Dabei werden für den ersten Trainingsdurchlauf die Gewichtsvektoren durch Zufallszahlen besetzt. Die Dimension der Gewichtsvektoren ist durch die Dimension des betrachteten Subvolumens, hier 75; vorgegeben und wird im nachfolgenden nicht mehr verändert.

Nun werden die Trainingsdaten in Form von Subvolumen der selbstorganisierenden Karte präsentiert. Es findet gemäß dem Lernverfahren der selbstorganisierenden Karte ein erster Adaptionsschritt statt. Das Training wird solange wiederholt, d. h., die Trainingsmuster werden auch mehrfach der selbstorganisierenden Karte präsentiert, bis ein vorgewähltes Fehlerkriterium oder eine zuvor definierte Anzahl von Schritten erreicht worden ist. Im vorliegenden Beispiel gemäß Fig. 3 werden 10.000 Schritte benötigt. Häufig sind deutlich mehr Adaptionsschritte notwendig.

Die Gewichtsvektoren werden nun festgelegt und können nicht mehr verändert werden. Die trainierte neuronale Karte ist als zentrales Ergebnis für die weitere Auswertung anzusehen. Im vorliegenden Ausführungsbeispiel gemäß Fig. 3 beträgt die Zahl der Klassen (Neuronen) 256.

Nunmehr wird das gesamte 3D-Meßdatenvolumen klassifiziert, indem zu jedem Meßdatenpunkt Subvolumen extrahiert werden. Alle diese Eingabemuster, also Trainingsmuster und zuvor nicht trainierte Subvolumen werden nun der Reihe nach dem festgelegten neuronalen Netzwerk präsentiert und die Ordnungszahl (hier 0 - 255) des Gewinnerneurons bestimmt. Zusätzlich wird der Abstand zwischen Eingabemuster und Gewichtsvektor als Maß für die Güte der Klassifizierung berechnet und dem Ergebnisdatensatz zugefügt.

In dem dargestellten Ausführungsbeispiel wurden die Ergebnisse entlang eines geologischen Horizontes aus dem klassifizierten Ergebnisdatensatz ausgeladen. Damit wurde eine horizontale Karte erstellt, bei der die für jeden wiedergegebenen Meßdatenpunkt zugeordnete Ordnungszahl (Klasse) mit einem der Klasseneinteilung entsprechenden Grauwert wiedergegeben wurde.

Dabei sind in Fig. 3 Störungszonen deutlich durch eine dunklere Wiedergabe hervorgehoben. Im nördlichen Teil der Karte und um den schwarz dargestellten Salzstockrand treten andere Klassen als im übrigen Gebiet auf. Hieraus läßt sich auf regionale Unterschiede im seismischen Erscheinungsbild schließen.

Insgesamt wird mit dem erfindungsgemäßen Verfahren eine automatische Auswertemethode für seismische 3D-Daten angegeben, bei der eine zuverlässige, von Einschätzungen des Bearbeiters weitgehend unabhängige Klassifizierung seismischer Daten erreicht wird. Nach Vorbestimmung bestimmter Randwerte, wie Subvolumengröße und -form, Anzahl der Trainingsdaten, gegebenenfalls Einschränkung des Auswahlbereiches und Vorgabe eines Fehlerkriteriums wird eine bearbeiterunabhängige Auswertung durchgeführt. Dabei wird das Training solange wiederholt, bis ein Fehlerkriterium unterschritten wird. Nötigenfalls wird die Klasseneinteilung dynamisch verändert.

Mit der Auswertung werden ähnliche dreidimensionale Signalabfolgen einer Klasse oder benachbarten Klassen zugeordnet. Diese Zuordnung ist aufgrund der Betrachtung von dreidimensionalen Subvolumen umgebungsabhängig und unabhängig vom subjektiven Eindruck eines Interpreten.

Mit der Klassifizierung können auch bestimmte Eigenschaften verknüpft werden, wobei bekannte Eigenschaften von Trainingsbeispielen mit einer bestimmten Verknüpfung, beispielsweise als gewichtetes Mittel, geometrisches Mittel, größerer Wert etc., zugeordnet werden. Beispiele für Eigenschaften sind: Reservoireigenschaften, wie Porosität oder Permeabilität, Störungseinfluß, Lithologie, Datenqualität oder auch Kennzahlen von 3D-Volumenoperatoren.

Die Klassifizierung erlaubt auch eine statistische Auswertung für jede Ordnungszahl. Andererseits können die Neuronen mit ähnlichen Eigenschaften zu mehrere Neuronen umfassenden Einheiten zusammengefaßt werden. Beispielsweise bilden alle Neuronen, die seismische Pattern nahe oder in Störungszonen repräsentieren, eine Einheit. Um die Ähnlichkeit von Neuronen bestimmen zu können, kann für jede Verbindung zwischen zwei Neuronen der Betrag des Differenzvektors oder das Skalarprodukt zwischen den beiden Neuronen berechnet werden. Dieser Wert gibt ein Maß für die Übereinstimmung der Gewichtsvektoren an und erlaubt eine objektive Auswertung.

## Patentansprüche

1. Verfahren zur Bearbeitung eines mit seismischen Attributen belegten 3-D Meßdatensatzes mittels eines neuronalen Netzwerkes, wobei mit ausgewählten Trainingsdaten eine selbstorganisierende Karte trainiert wird und die zu untersuchenden Daten nach der selbstorganisierenden Karte klassifiziert werden, **dadurch gekennzeichnet, daß** die Trainingsdaten aus dem Meßdatensatz zufällig ausgewählt und die Meßdaten in Form von eine räumliche Umgebung eines jeden Meßdatenpunktes umfassenden Subvolumen bearbeitet werden.

2. Verfahren nach Anspruch 1, **dadurch gekennzeichnet, daß** jedes Subvolumen aus einem Meßdatenpunkt als Bezugspunkt und einer vorgewählten Anzahl und relativen Lage zum Bezugspunkt von Meßdatenpunkten aus der Umgebung des Bezugspunktes besteht.

3. Verfahren nach Anspruch 2, **dadurch gekennzeichnet, daß** die Dimension der im neuronalen Netz verwendeten Gewichtsvektoren der Anzahl von Datenpunkten im Subvolumen entspricht.

4. Verfahren nach Anspruch 2 oder 3, **dadurch gekennzeichnet, daß** die Subvolumen Quaderform haben und wenigstens 3 x 3 x 3 Datenpunkte umfassen.

5. Verfahren nach Anspruch 2 oder 3, **dadurch gekennzeichnet, daß** die Subvolumen Ellipsoidform mit um den Bezugspunkt zentrierten Hauptachsen haben.

6. Verfahren nach einem der vorangehenden Ansprüche, **dadurch gekennzeichnet, daß** die Auswahl auf vorbestimmte Meßdatenlinien und -querlinien beschränkt wird.

7. Verfahren nach einem der vorangehenden Ansprüche, **dadurch gekennzeichnet, daß** die Trainingsdaten aus einer von zwei umgebenden Horizonten definierten Zielschicht des Meßdatensatzes zufällig ausgewählt werden.

8. Verfahren nach einem der vorangehenden Ansprüche, **dadurch gekennzeichnet, daß** für alle Subvolumen aus dem Meßdatensatz Kennzahlen bestimmt und Trainingsdaten nach vorbestimmten, aus den Kennzahlen abgeleiteten Kriterien ausgewählt werden.

9. Verfahren nach Anspruch 8, **dadurch gekennzeichnet, daß** die Verteilung der Kennzahlen aller Subvolumen aus dem Meßdatensatz bestimmt und die Trainingsdaten so ausgewählt werden, daß die Verteilung der Kennzahlen der Trainingsdaten mit der Verteilung der Kennzahlen aller Subvolumen aus dem Meßdatensatz übereinstimmt.

10. Verfahren nach Anspruch 8, **dadurch gekennzeichnet, daß** die Verteilung der Kennzahlen aller Subvolumen aus dem Meßdatensatz bestimmt und die Trainingsdaten so ausgewählt werden, daß die Verteilung der Kennzahlen der Trainingsdaten einer zuvor gewählten Verteilung entspricht.

11. Verfahren nach einem der Ansprüche 3 bis 10, **dadurch gekennzeichnet, daß** die Gewichtsvektoren bei Trainingsbeginn mit Zufallszahlen besetzt werden.

12. Verfahren nach einem der Ansprüche 3 bis 11, **dadurch gekennzeichnet, daß** die Gewichtsvektoren aus einer früheren, ähnlichen Berechnung übernommen werden.

13. Verfahren nach einem der vorangehenden Ansprüche, **dadurch gekennzeichnet, daß** das Training solange durchgeführt wird, bis ein vorbestimmtes Fehlerkriterium erreicht wird.

14. Verfahren nach einem der vorangehenden Ansprüche, **dadurch gekennzeichnet, daß** die Zahl und/oder Vernetzung der Neuronen während des Trainingslaufes nach Fehlerkriterien verändert wird.

15. Verfahren nach Anspruch 14, **dadurch gekennzeichnet, daß** das Neuronennetz eine 2-dimensionale Gitteranordnung ist.

16. Verfahren nach Anspruch 14, **dadurch gekennzeichnet, daß** das Neuronennetz in Torusform angeordnet ist.

17. Verfahren nach Anspruch 14, **dadurch gekennzeichnet, daß** das Neuronennetz als eine oder mehrere Ketten ausgebildet ist.

18. Verfahren nach Anspruch 14, **dadurch gekennzeichnet, daß** das Neuronennetz in einem dreidimensionalen Gitter angeordnet ist.

19. Verfahren nach einem der vorangehenden Ansprüche, **dadurch gekennzeichnet, daß** jedes Neuron eine eindeutige Ordnungszahl aufweist und jedem Meßdatenpunkt die entsprechende Ordnungszahl des Gewinnerneurons und ein Einzelfehler als Abstand zwischen dem Meßdatenpunkt und dem Gewinnerneuron als Ergebnisdatensatz zugeordnet wird.

20. Verfahren nach Anspruch 19, **dadurch gekennzeichnet, daß** aus dem Ergebnisdatensatz Karten oder Schnitte zur 2D-Darstellung extrahiert werden.

21. Verfahren nach Anspruch 19 oder 20, **dadurch gekennzeichnet, daß** bei zweidimensionaler Neuronenanordnung die Ordnungszahlen der Neuronen als Polarkoordinaten errechnet werden, wobei die Winkelkoordinate eines Neurons einen Farbwert und der Radius eine Sättigung angibt.

22. Verfahren nach Anspruch 19 oder 20, **dadurch gekennzeichnet, daß** bei dreidimensionaler Neuronenanordnung Farbe, Sättigung und Intensität aus in Kugelkoordinaten errechneten Ordnungszahlen abgeleitet werden.

23. Verfahren nach einem der vorangehenden Ansprüche, **dadurch gekennzeichnet, daß** ein Eingabedatensatz aus aus den seismischen Daten abgeleiteten Attributen, nämlich akustisches Impedanzvolumen, Kohärenz, Neigung und/oder Azimuth gebildet wird.

## Claims

1. A method for the processing of a 3-D measurement data set provided with seismic attributes, by means of a neural network, where a self-organising map is trained by selected training data, and the data to be investigated are classified according to the self-organising map, and where the method is **characterized in that** the training data are randomly selected from the measurement data set, and that the measurement data are processed in the form of sub-volumes, comprising a spatial environment of each sample.

2. The method according to claim 1, **characterized in that** each sub-volume consists of a sample as reference point, and of a pre-defined number of samples from the environment of the reference point, and of the pre-defined relative location of these samples with respect to the reference point.

3. The method according to claim 2, **characterized in that** the dimension of the weight vectors used in the neural net corresponds to the number of the samples in the sub-volume.

4. The method according to claim 2, or 3 **characterized in that** the sub-volumes possess a square-stone shape and comprise at least 3 x 3 x 3 samples.

5. The method according to claim 2, or 3, **characterized in that** the sub-volumes possess the shape of an ellipsoid with its main axes centred at the reference point.

6. The method according to any one of the preceding claims, **characterized in that** the selection is restricted to pre-defined inlines and crosslines of the measurement data set.

7. The method according to any one of the preceding claims, **characterized in that** the training data are randomly selected from a target layer of the measurement data set, where the target layer is defined by two enclosing horizons.

8. The method according to any one of the preceding claims, **characterized in that** characteristic parameter values are determined for all sub-volumes of the measurement data set, and that training data are selected according to predefined criteria that are derived from the characteristic parameter values.

9. The method according to claim 8, **characterized in that** the distribution of the characteristic parameter values from all sub-volumes of the measurement data set is determined, and the training data are selected such that the distribution of the characteristic parameter values from the training data corresponds with the distribution of the characteristic parameter values of all sub-volumes of the measurement data set.

10. The method according to claim 8, **characterized in that** the distribution of the characteristic parameter values from all sub-volumes of the measurement data set is determined, and the training data are selected such that the distribution of the characteristic parameter values from the training data corresponds to a previously selected distribution.

11. The method according to any one of the claims 3 to 10, **characterized in that** the weight vectors are filled with random numbers at the start of the training.

12. The method according to any one of the claims 3 to 11, **characterized in that** the weight vectors may be adopted from an earlier, similar computation.

13. The method according to any one of the preceding claims, **characterized in that** the training is carried out for such a duration, until a pre-defined error criterion is fulfilled.

14. The method according to any one of the preceding claims, **characterized in that** the number and/or the network connections of the neurons are changed during the training run, based on error criteria.

15. The method according to claim 14, **characterized in that** the neural net is a two-dimensional grid configuration.

16. The method according to claim 14, **characterized in that** the neural net is arranged in the form of a torus.

17. The method according to claim 14, **characterized in that** the neural net is embodied by one chain, or by several chains.

18. The method according to claim 14, **characterized in that** the neural net is arranged in a three-dimensional grid.

19. The method according to any one of the preceding claims, **characterized in that** each neuron possesses a unique ordinal number, and that to each sample, the corresponding ordinal number of the winner neuron, and an individual error, given as the distance between the sample and the winner neuron, are assigned as a result data set.

20. The method according to claim 19, **characterized in that** maps, or slices can be extracted from the result data set for a 2D display.

21. The method according to claim 19, or 20, **characterized in that** in case of a two-dimensional configuration of the neurons, the ordinal numbers of the neurons are computed as polar co-ordinates, where the angle co-ordinate of a neuron determines a hue, and the radius determines a saturation.

22. The method according to claim 19, or 20, **characterized in that** in case of a three-dimensional configuration of the neurons, the hue, saturation, and intensity are derived from ordinal numbers computed in spherical co-ordinates.

23. The method according to any one of the preceding claims, **characterized in that** the input data set is formed by attributes derived from the seismic data, namely a volume of acoustic impedance, coherency, dip and/or azimuth.

## Revendications

1. Procédé pour le traitement d'un ensemble de données de mesure tridimensionnelles contenant des attributs sismiques au moyen d'un réseau neuronal, une carte auto-organisatrice faisant l'objet d'un apprentissage avec des données d'apprentissage sélectionnées et les données à analyser étant classifiées selon la carte auto-organisatrice, **caractérisé en ce que** les données d'apprentissage sont choisies de façon aléatoire dans l'ensemble des données de mesure et les données de mesure sont traitées sous la forme de sous-volumes comprenant un environnement spatial d'un des points de données de mesure.

2. Procédé selon la revendication 1, **caractérisé en ce que** chaque sous-volume se compose d'un point de données de mesure en tant que point de référence ainsi que d'un nombre prédéfini et d'une position relative par rapport au point de référence de points de données de mesure de l'environnement du point de référence.

3. Procédé selon la revendication 2, **caractérisé en ce que** la dimension du vecteur de poids utilisé dans le réseau neuronal correspond au nombre de points de données dans les sous-volumes.

4. Procédé selon la revendication 2 ou 3, **caractérisé en ce que** les sous-volumes sont cuboïdes et comprennent au moins 3 x 3 x 3 points de données.

5. Procédé selon la revendication 2 ou 3, **caractérisé en ce que** les sous-volumes ont une forme ellipsoïdale avec des axes principaux centrés autour du point de référence.

6. Procédé selon l'une des revendications précédentes, **caractérisé en ce que** le choix des lignes et des lignes transversales de données de mesure prédéfinies est limité.

7. Procédé selon l'une des revendications précédentes, **caractérisé en ce que** les données d'apprentissage sont choisies de façon aléatoire dans une couche cible de l'ensemble de données de mesure, définie par deux horizons environnants.

8. Procédé selon l'une des revendications précédentes, **caractérisé en ce que** pour chacun des sous-volumes, des indices sont déterminés à partir de l'ensemble des données de mesure et des données d'apprentissage sont choisies selon des critères prédéterminés dérivés des indices.

9. Procédé selon la revendication 8, **caractérisé en ce que** la distribution des indices de tous les sous-volumes est déterminée à partir de l'ensemble des données de mesure et les données d'apprentissage sont choisies de telle sorte que la distribution des indices des données d'apprentissage coïncide avec la distribution des indices de tous les sous-volumes issus de l'ensemble des données de mesure.

10. Procédé selon la revendication 8, **caractérisé en ce que** la distribution des indices de tous les sous-volumes est déterminée à partir de l'ensemble des données de mesure et les données d'apprentissage sont choisies de telle sorte que la distribution des indices des données d'apprentissage correspond à une distribution choisie préalablement.

11. Procédé selon l'une des revendications 3 à 10, **caractérisé en ce que** les vecteurs de poids au début de l'apprentissage sont occupés par des nombres aléatoires.

12. Procédé selon l'une des revendications 3 à 11, **caractérisé en ce que** les vecteurs de poids sont repris d'un calcul antérieur semblable.

13. Procédé selon l'une des revendications précédentes, **caractérisé en ce que** l'apprentissage est effectué jusqu'à ce qu'un critère d'erreur prédéfini soit atteint.

14. Procédé selon l'une des revendications précédentes, **caractérisé en ce que** le nombre et / ou l'interconnexion des neurones sont modifiés durant l'apprentissage selon des critères d'erreur.

15. Procédé selon la revendication 14, **caractérisé en ce que** le réseau neuronal est un réseau bidimensionnel.

16. Procédé selon la revendication 14, **caractérisé en ce que** le réseau neuronal est disposé en forme de tore.

17. Procédé selon la revendication 14, **caractérisé en ce que** le réseau neuronal est formé d'une ou plusieurs chaînes.

18. Procédé selon la revendication 14, **caractérisé en ce que** le réseau neuronal est disposé dans un réseau tridimensionnel.

19. Procédé selon l'unes des revendications précédentes, **caractérisé en ce que** chaque neurone présente un nombre ordinal univoque et à chaque point de données de mesure est attribué sous forme de jeu de données le nombre ordinal correspondant du neurone vainqueur et une erreur isolée sous forme de distance entre le point de données de mesure et le neurone vainqueur.

20. Procédé selon la revendication 19, **caractérisé en ce que** des cartes ou des sections sont extraites des jeux de données de résultat pour une représentation bidimensionnelle.

21. Procédé selon la revendication 19 ou 20, **caractérisé en ce que** pour les dispositions neuronales bidimensionnelles, les nombres ordinaux des neurones sont calculés sous forme de coordonnées polaires, la coordonnée angulaire d'un neurone indiquant une valeur de couleur et le rayon une saturation.

22. Procédé selon la revendication 19 ou 20, **caractérisé en ce que** pour les dispositions neuronales tridimensionnelles, la couleur, la saturation et l'intensité sont déduites de nombres ordinaux calculés dans des coordonnées sphériques.

23. Procédé selon l'une des revendications précédentes, **caractérisé en ce qu'**un jeu de données d'entrée est formé à partir d'attributs déduits des données sismiques, à savoir des volumes d'impédance acoustique, de la cohérence, de l'inclinaison et / ou de l'azimut.
